Europäisches Patentamt

European Patent Office

Office européen des brevets

(19)

(11) Veröffentlichungsnummer : **0 161 289 B1**

(12) **EUROPÄISCHE PATENTSCHRIFT**

(45) Veröffentlichungstag der Patentschrift :
25.05.88

(21) Anmeldenummer : 84904095.1

(22) Anmeldetag : 02.11.84

(86) Internationale Anmeldenummer :
PCT/DE 84/00231

(87) Internationale Veröffentlichungsnummer :
WO/8501957 (09.05.85 Gazette 85/11)

(51) Int. Cl.⁴ : **C 12 C 13/04, B 01 D 1/28**

(54) VERFAHREN ZUR THERMISCHEN BEHANDLUNG VON FLÜSSIGKEITEN BZW. FLÜSSIGKEIT-FESTSTOFFGEMIS-
CHEN ZUR KONZENTRATION DER FLÜSSIGKEITSINHALTSSTOFFE UND ANLAGE ZUR DURCHFÜHRUNG DES
VERFAHRENS.

(30) Priorität : 03.11.83 DE 3339711

(43) Veröffentlichungstag der Anmeldung :
21.11.85 Patentblatt 85/47

(45) Bekanntmachung des Hinweises auf die Patenterteilung : 25.05.88 Patentblatt 88/21

(84) Benannte Vertragsstaaten :
AT BE CH FR GB LI NL SE

(56) Entgegenhaltungen :
FR-A- 2 491 948

(73) Patentinhaber : KTI KINETICS TECHNOLOGY INTER-
NATIONAL GMBH
Kieler Strasse 163
D-2000 Hamburg 54 (DE)

(72) Erfinder : FISCHER, Dieter
Im Hauen 227
D-2080 Pinneberg (DE)
Erfinder : MÖHLENBECK, Klaus-Jürgen
Blink 18
D-2081 Hetlingen (DE)

(74) Vertreter : Schmidt-Bogatzky, Jürgen, Dr. Ing.
Schlossmühlendamm 1
D-2100 Hamburg 90 (DE)

EP 0 161 289 B1

## Beschreibung

Die Erfindung betrifft ein Verfahren zur thermischen Behandlung von Flüssigkeiten bzw. Flüssigkeits-Feststoffgemischen zur Konzentration der Flüssigkeitsinhaltsstoffe, bei dem der abgeschiedene Dampf in mindestens einem Dampfstrahlverdichter verdichtet und mindestens einem Wärmetauscher zugeführt wird, durch den die zu konzentrierende Flüssigkeit vorerwärmt strömt, und eine Anlage zur Durchführung des Verfahrens mit einem Behälter für die thermisch zu behandelnde Flüssigkeit bzw. das Flüssigkeits-Feststoffgemisch und mindestens einem Dampfstrahlverdichter, der ausgangsseitig mit dem Wärmetauscher verbunden ist, durch den die aus dem Behälter abgepumpte Flüssigkeit bzw. das Flüssigkeits-Feststoffgemisch strömt.

Es ist bekannt, zur Verdampfung von Flüssigkeiten mechanische Wärmepumpen zu verwenden. Voraussetzung hierfür ist, daß die zu verdampfende Flüssigkeit sich auf Siedetemperatur befindet, da bei dieser Art der Verdichtung die elektrische Fremdenergie nicht ausreicht, um auch noch eine Temperaturerhöhung der Flüssigkeit von einem niederen Niveau auf Siedetemperatur zu erreichen. Diese Verfahren werden z. B. zur Seewasserverdampfung und zur Kochung von Bierwürze verwandt. Bei der Bierwürze muß aber die Temperaturerhöhung bis zur gewünschten Siedetemperatur durch externe Energiezufuhr erfolgen. Bei diesen bekannten Verfahren besteht der Nachteil, daß die erforderliche Zufuhr von Energie die Kosten des Verfahrens erhöht. Andere Verfahren, die auf dem Prinzip des kontinuierlichen Durchlaufverfahrens beruhen, werden bei Temperaturen oberhalb von ca. 120 °C betrieben. Diese energetisch optimalen Verfahren können jedoch bei höheren Temperaturen mit biologischen Problemen verbunden sein.

In der FR-A-2 491 948 ist ein Verfahren beschrieben, bei dem die Verdichtung der Kochbrüden mittels Dampfstrahlverdichter in der bekannten Anordnung eines Außenkochers erfolgt. Aus der Würzepfanne wird die Flüssigkeit über eine Umwälzpumpe durch Wärmetauscher gedrückt und über einen Druckminderer wieder in die Würzepfanne zurückgepumpt. Gleichzeitig werden aus der Würzepfanne die Brüden über eine Absaugeinrichtung abgesaugt und in den Dampfstrahlverdichtern verdichtet und unter Zumischung von Frischdampf aus einem Wasserdampfdruckkessel den Wärmetauschern zur Beheizung zugeführt. Damit in der Würzepfanne Brüden überhaupt entstehen können, muß die Würze zunächst auf Kochtemperatur gebracht werden, wonach dann die Verdichtung der entstehenden Brüden über die Dampfstrahlverdichter erfolgen kann. Bei diesem bekannten Verfahren wird somit zwischen einer Aufheizphase der gesamten Flüssigkeitsmenge bzw. Flüssigkeits-Feststoffgemischmenge auf Kochtemperatur und der dann anschließenden Kochphase unterschieden, wobei die Aufheizphase im Verhältnis zur Kochphase relativ lang ist. Ferner ermöglicht dieses bekannte Verfahren nur einen Chargenbetrieb.

Die Aufgabe der Erfindung besteht darin, das Verfahren der eingangs beschriebenen Art sowie die zu dessen Durchführung dienende Anlage so zu verbessern, daß die Aufheizphase vermindert wird und außerdem auch das Verfahren kontinuierlich durchgeführt werden kann. Hierbei soll es möglich sein, die Würze nur bei mäßigen Temperaturen im Bereich von 105 °C bis etwa 120 °C behandeln zu können.

Erfindungsgemäß erfolgt die Lösung der Aufgabe dadurch, daß die zu behandelnde Flüssigkeit nach Vorerwärmung einem thermischen Kreislauf mit auf Siedetemperatur befindlichem Temperaturniveau zugeführt wird, in dem sich der mindestens eine Dampfabscheider befindet, von dem der abgeschiedene Dampf auf ein höheres Temperaturniveau verdichtet und einem oder mehreren weiteren Wärmetauschern zugeführt wird, in denen die zuvor übertragene Wärmeenergie teilweise zur Erhöhung der Temperatur vom Einspeisungszustand auf den Temperaturzustand im Kreislauf und teilweise zur Verdampfung der Flüssigkeit verwandt wird.

In einer weiteren Ausgestaltung der Erfindung ist die Anlage zur Durchführung des Verfahrens dadurch gekennzeichnet, daß die zu kochende Flüssigkeit von dem Behälter einem heißen Kreislauf zuführbar ist, in dem die Flüssigkeit nach weiterer Erwärmung in dem Wärmetauscher einem Dampfabscheider mit einer Verteileinrichtung im Dampfraum zuführbar ist, dessen dampfseitiger Ausgang mit einem oder mehreren Dampfstrahlverdichtern verbunden ist, die ausgangsseitig über eine Leitung und den Wärmetauscher mit einem Kondensatableiter verbunden sind, wobei die den Wärmetauscher primärseitig durchströmende Flüssigkeit unter teilweiser Verdampfung auf Siedetemperatur $t_s$ aufheizbar und die aus dem Dampfabscheider über die Leitung und Pumpe abfließende konzentrierte Flüssigkeit des heißen Kreislaufs ganz oder teilweise einem Behälter für Fluidkonzentrat zuführbar ist, wobei ggf. in einem weiteren Wärmetauscher die über die Leitung vom Behälter zufließende Flüssigkeit durch konzentrierte Flüssigkeit des heißen Kreislaufs von einer Temperatur $t_2$ auf eine Temperatur $t_3$ erwärmbar ist, und daß in der Leitung zwischen dem Ausgang des Behälters und den Wärmetauschern eine aus einem Durchflußmengenmesser und einem Regelventil bestehende Regeleinrichtung zur Durchflußmengenregelung angeordnet ist.

Gegenüber dem bekannten Verfahren ist es bei dem Verfahren nach der Erfindung von Vorteil, daß durch den besonderen thermischen Kreislauf lediglich eine äußerst kurze Aufheizphase erforderlich ist, an die sich eine sehr lange kombinierte Kochphase mit integrierter Aufheizung anschließt. Bis auf die Aufheizphase der geringen Flüssigkeits- bzw. Flüssigkeits-Feststoffgemischmenge im thermischen Kreislauf wird eine kombinierte Aufheiz-Kochphase benutzt, während der Brüden auch beim Aufheizen der zugeführten kalten Flüssigkeits- bzw. Flüssigkeits-Feststoffgemischmenge entstehen.

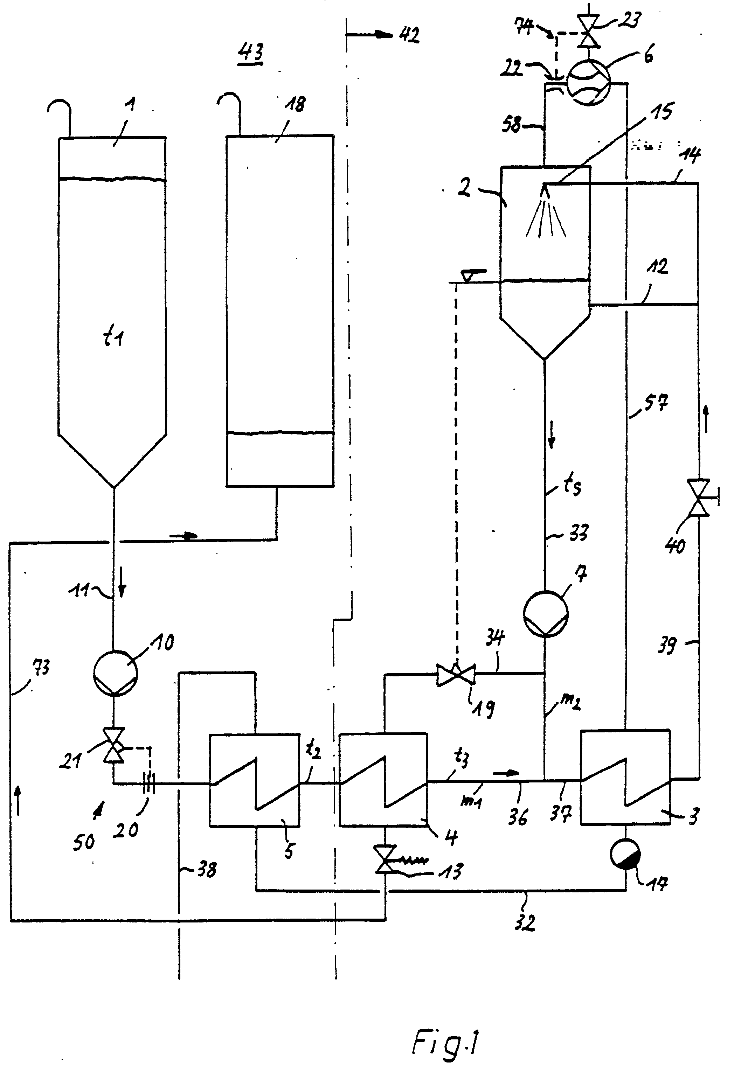

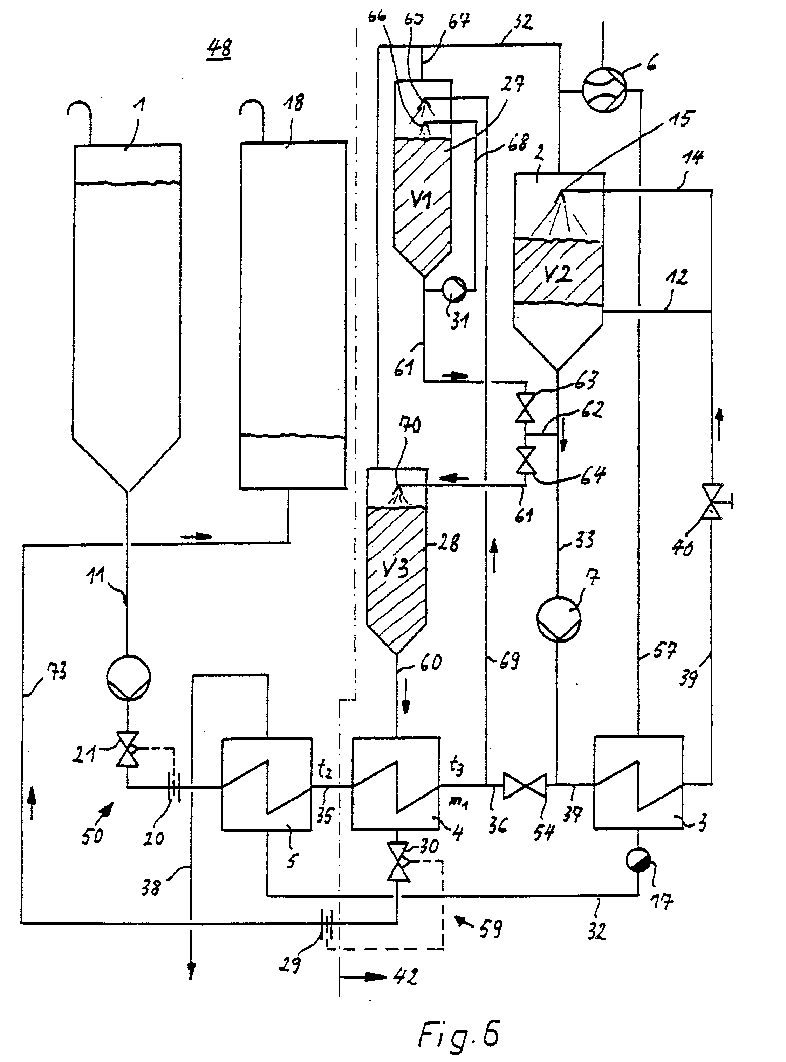

Weitere Merkmale der Erfindung werden in den abhängigen Ansprüchen beschrieben. In den Zeichnungen sind in den Fig. 1 bis 7 verschiedene Ausführungsformen von Anlagen zur Durchführung des erfindungsgemäßen Verfahrens dargestellt, die nachstehend näher erläutert werden, wobei als Anwendungsfall das Kochen von Bierwürze angenommen wird.

Die Fig. 1 zeigt eine Anlage 43. Die zu kochende Würze befindet sich in dem Behälter 1 und wird über die Pumpe 10 dem als heißen Kreislauf 42 ausgebildeten Verdampfungskreislauf zugeführt. In dem heißen Kreislauf befindet sich die Würze auf Siedetemperatur und wird über die Pumpe 7 umgewälzt. Bei Inbetriebnahme des Dampfstrahlverdichters 6 wird Dampf aus dem Dampfabscheider 2 abgesaugt und verdichtet dem Wärmetauscher 3 zugeführt. Die Energiezufuhr aus dem Treibdampf des Strahlverdichters dient zur Erhöhung der Würzetemperatur von t3 auf ts. Der Flüssigkeitsstand im Dampfabscheider 2 wird über das Ventil 19 auf dem gewünschten Wert gehalten. Die Einleitung des Flüssigkeitsdampfgemisches in dem Dampfabscheider 2 kann entweder im Bereich der Flüssigkeit über die Leitung 12 oder im Bereich des Dampfraumes über die Leitung 14 und einer Verteileinrichtung 15 oder auch über die Leitungen 12, 14 gleichzeitig erfolgen. Die Einstellung der Durchflußmenge kann mit dem Ventil 40 in der Leitung 39 erfolgen. Die mittlere Verweilzeit der Flüssigkeit im heißen Kreislauf 42 wird durch die Durchflußmenge und den Anlageninhalt des heißen Kreislaufs bestimmt und läßt sich durch Variieren des Flüssigkeitsstandes im Behälter 2 beeinflussen. Zur teilweisen Ausnutzung der Energie der mit hoher Temperatur über das Ventil 19 abfließenden Würze ist ein Wärmetauscher 4 vorhanden, der die zufließende Würze von der Temperatur t2 auf t3 vorwärmt. Es kann auch noch ein Wärmetauscher 5 zur Rückkühlung des aus dem als Kondensator dienenden Wärmetauscher 3 abfließenden Kondensates vorgesehen werden. Damit sich die heiße Würze nicht vor dem Wärmetauscher 4 entspannt und dann folglich nur ein geringeres Temperaturgefälle zur Verfügung steht, ist ein Druckhalteventil 13 vorhanden. Die abfließende Würze wird in den Behälter 18 geleitet. Das Verhältnis der über den Verdichter 6 abgesaugten Brüdendampfmenge und der mittels der Pumpe 10 eingespeisten Würzemengen bestimmt die anteilige Verdampfungsmenge. Die Einstellung kann über den Durchflußmengenmesser 22 und das Regelventil 23 der Regeleinrichtung 74 erfolgen.

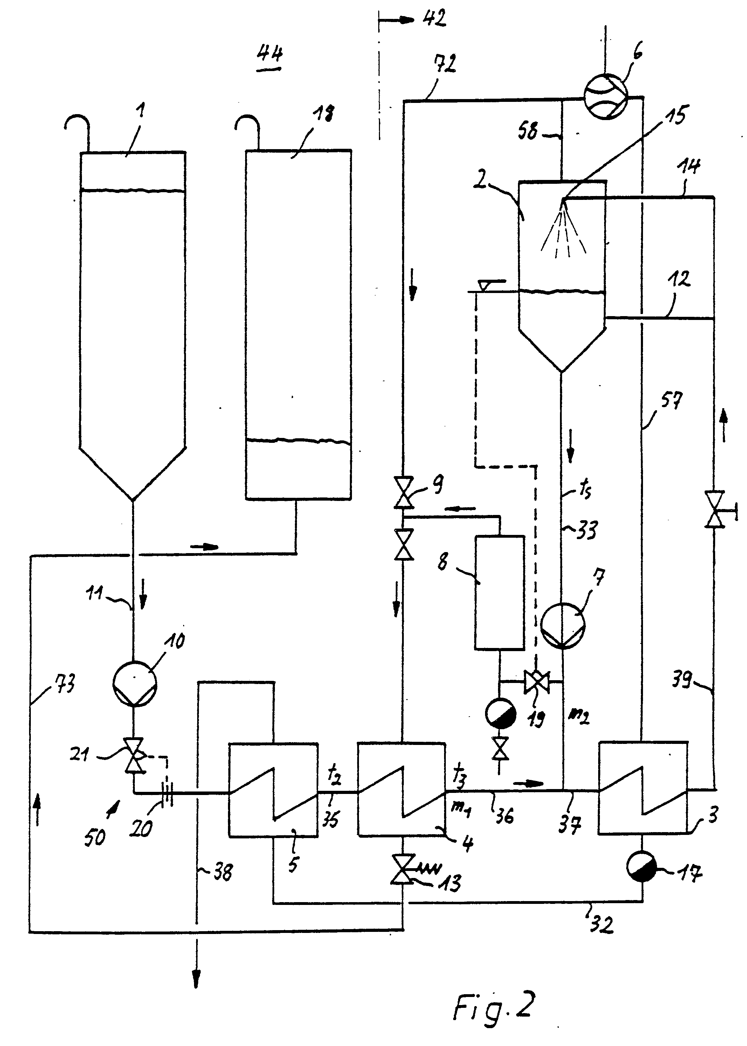

In Fig. 2 ist eine Anlage 44 dargestellt, bei der dem Abfluß des thermischen Kreislaufes ein Apparat 8 nachgeschaltet ist, um so die thermische Reaktionszeit verlängern zu können. Zur Vorwärmung des Apparates 8 wird der Brüdendampf demselben aus dem Dampfabscheider 2 über die Leitung 72 und die Rückschlagarmatur 9 zugeführt. Damit sich in dem Apparat 8 eine Kolbenströmung 9 einstellen kann, ist dieser zweckmäßig als Röhrensystem auszubilden.

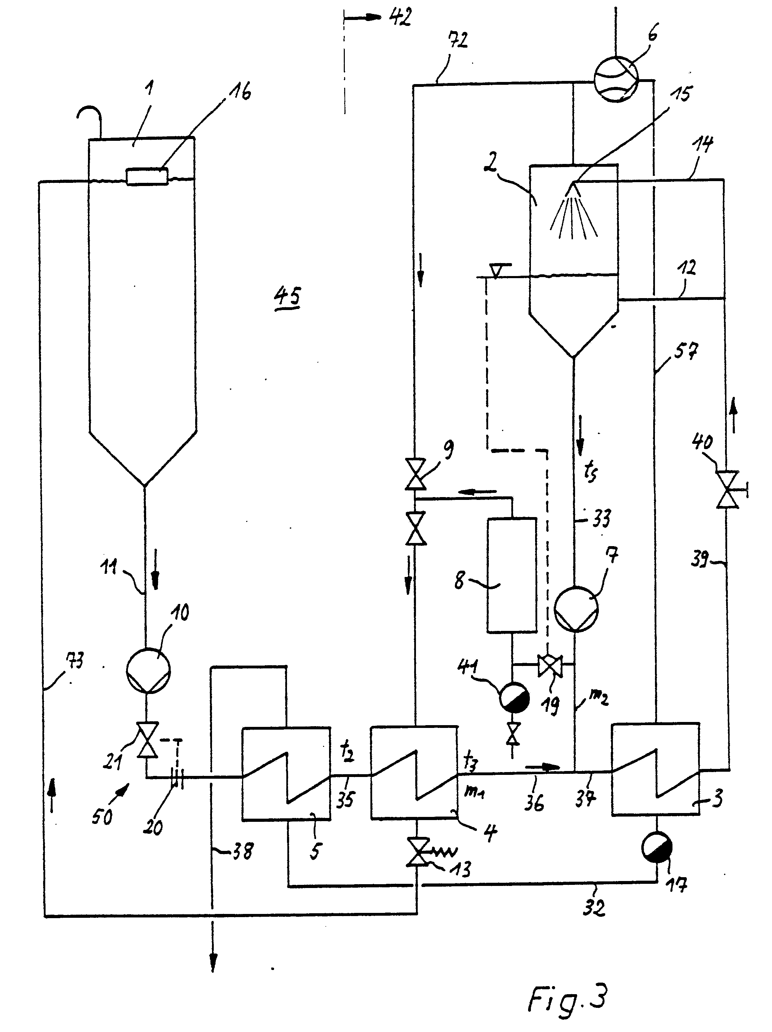

Die Anlage 45 nach Fig. 3 entspricht der Ausführung nach Fig. 2, jedoch mit der Änderung, daß die Würze wieder in den gleichen Behälter 1 zurückgeführt wird. Die Einleitung der gekochten Würze erfolgt über die Einlaßvorrichtung 16, die so ausgebildet ist, daß die Würze sich ohne Durchmischung über die im Behälter 1 vorhandene Würze schichten kann, so daß sich im Behälter 1 eine Kolbenströmung einstellt. Die Einlaßvorrichtung 16 paßt sich hierbei dem unterschiedlichen Niveau in dem Behälter an.

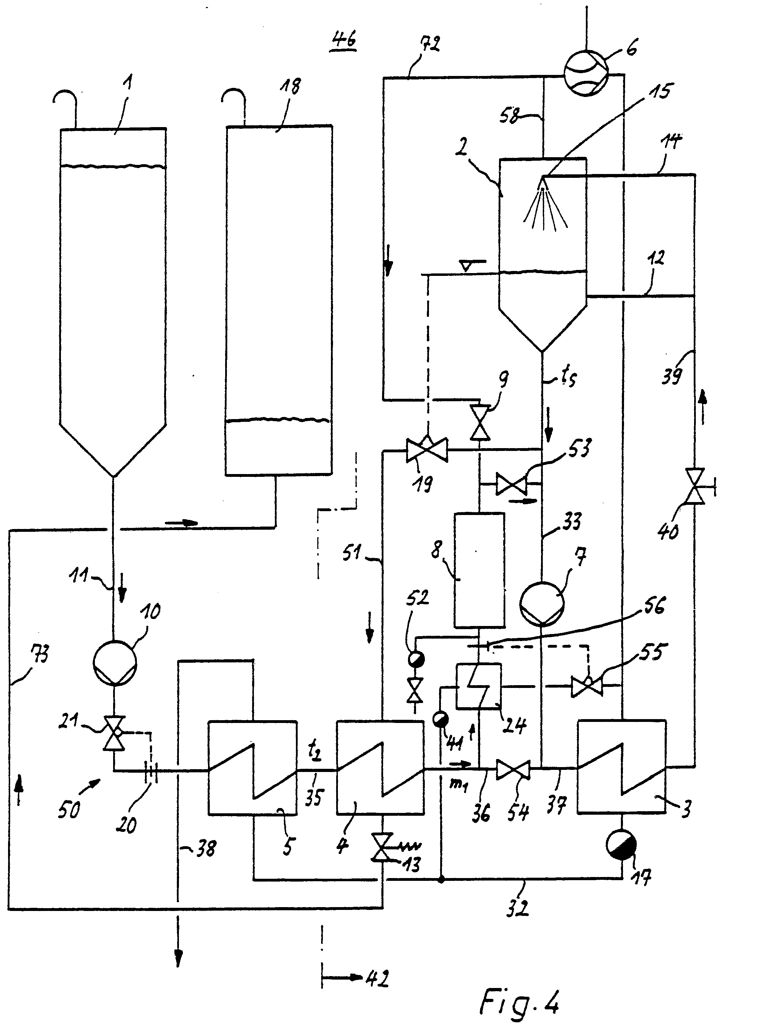

Die Anlage 46 nach Fig. 4 ist eine Variante, bei der ein Apparat 8 vor dem Umlaufsystem installiert ist, in dem die eingespeiste Würze vor Einleitung in das Kreislaufsystem zur thermischen Reaktion heißgehalten wird, wobei die Höhe der Temperatur einstellbar ist. Die Vorwärmung erfolgt hier über den Wärmetauscher 24. Der Vorteil dieser Ausführung besteht darin, daß flüchtige Reaktionsprodukte, die sich im Apparat 8 gebildet haben, im Behälter 2 abgeschieden und mit dem Brüdendampf abgeführt werden können.

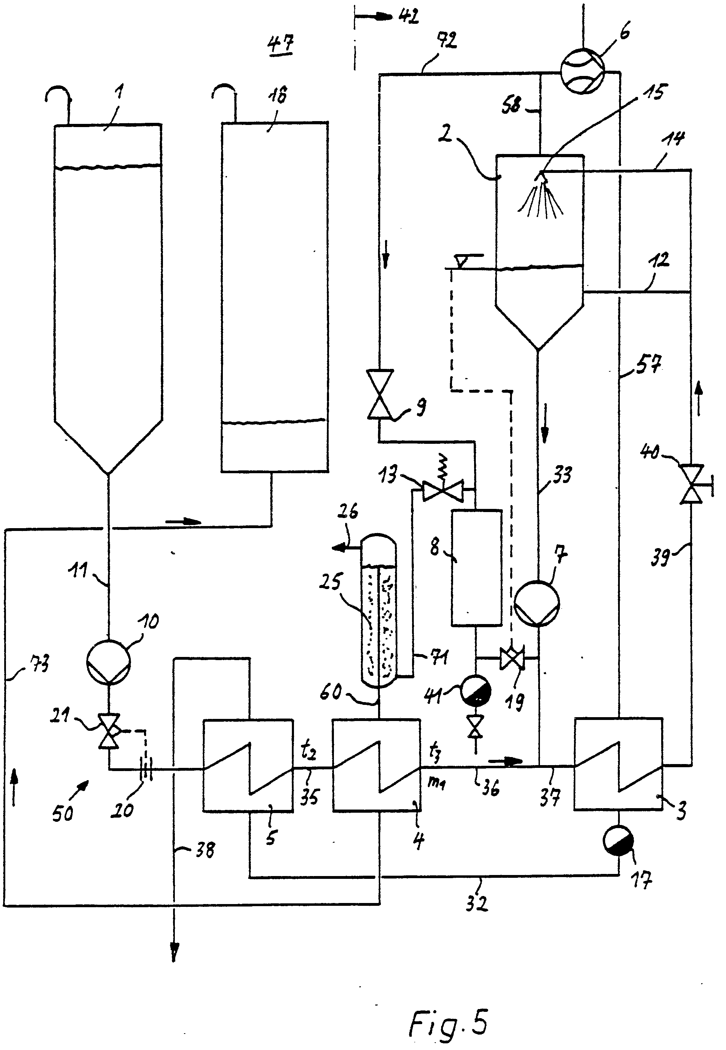

Die Anlage 47 nach Fig. 5 entspricht der Anlage 44 nach Fig. 2, wobei jedoch die Würze nach dem Druckhalteventil 13 entspannt wird. Das Flüssigkeitsdampfgemisch strömt in den Behälter 25, in dem der Entspannungsdampf durch die Würze geleitet wird und am Auslaßstutzen 26 zur weiteren Verwendung austritt. Die Ausführung kann auch so gestaltet werden, daß die Trennung der Phasen bereits im Dampfraum geschieht und hierbei gleichzeitig ein Versprühen durch die Entspannung erfolgt.

In den bisher beschriebenen Ausführungen erfolgt die Zuführung der Würze über die Wärmetauscher und auch zum heißen Umlaufsystem kontinuierlich. Dieses hat zur Folge, daß ein Teil der in das Umlaufsystem eingespeisten Würze bereits nach dem ersten Umlauf wieder aus dem System ausgetragen wird, und zwar abhängig vom Verhältnis der Massenströme m1 : m2 in Fig. 1. Beim Verhältnis 1 : 20 würden somit 5 % nach dem 1. Umlauf und weitere 5 % nach dem 2. Umlauf der verbleibenden Restmenge ausgetragen werden. Diese Verhältnisse lassen sich wesentlich verbessern, wenn der Würzeaustausch im Kreislauf des Behälters 2 diskontinuierlich erfolgt. Damit weiterhin auch, wie es für den Wärmeaustausch erforderlich ist, die Zu- und Ableitung der Würze zum heißen Kreislauf 42 kontinuierlich erfolgen kann, sind weitere zwei Behälter 27, 28 für ein Anlage 48 erforderlich. Das schraffiert dargestellte Volumen v1, v2, v3 sollte etwa gleich sein. Nach ausreichender Verweildauer des Volumens v2 im Dampfabscheider 2 wird dieses Volumen in den dann leeren Behälter 28 abgelassen und das Volumen v1 nachfolgend in den heißen Kreislauf 42 gefüllt. Die durch die Behälter 27, 28 gebildeten nachgeschalteten Volumen v1, v3 wirken als Zwischenspeicher, in denen die Bierwürze heiß gehalten und dem notwendigen biologischen Prozeß unterworfen wird. Damit im heißen Kreislauf 42 keine nennenswerten Druckschwankungen auftreten, muß das Würzevolumen bereits auf Kreislauftemperatur vorgewärmt worden sein. Die Vorwärmung kann mittels Brüdendampf aus dem Behälter 2 erfolgen. Der kontinuierliche Abfluß aus dem heißen Anlagenbereich wird durch die Regeleinrichtung 59 geregelt und erfolgt über den Wärmetauscher 4, wodurch sich der Behälter 28 gleichmäßig entleert. Gleichzeitig wird der Behälter 27 aufgefüllt und die Würze über einen Mischvorwärmer im oberen Bereich des Behälters 27 auf die gewünschte Systemtemperatur gebracht. Um einen ausreichenden Temperaturangleich zu erhalten, kann eine zusätzliche Umwälzpumpe 31 mit einer Beimischleitung vorgesehen werden. Nach entleertem Behälter (28) und parallel hierzu gefülltem Behälter 27 beginnt ein neuer Austauschvorgang im Dampfabscheider 2. Ist es unerwünscht, daß das Kondensat aus dem Mischvorwärmer in den Kreislauf gelangt, so kann die Vorwärmung der Würze im Behälter 27 auch auf eine andere Art erfolgen, z. B. wie bei der Anlage 46 über einen Wärmetauscher 24.

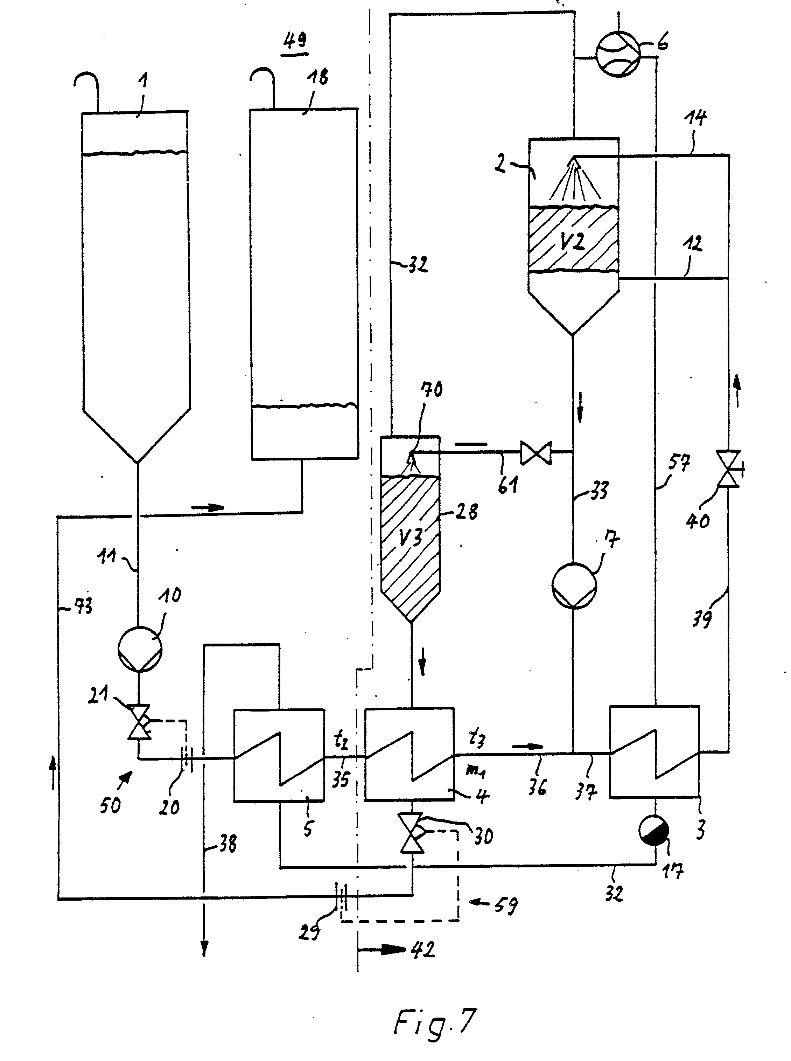

In Fig 7 ist eine Anlage 49 dargestellt, bei der die Zuführung der Würze in den heißen Kreislauf 42 zwar kontinuierlich erfolgt, der Abfluß aber bis zur Auffüllung des Volumens v2 angestaut wird, um dann in den Behälter 28 abgelassen zu werden. Von hieraus wird die Würze dann wieder über den Wärmetauscher 4 zur Vorwärmung der Einspeisungsmenge abgeleitet. Auch bei dieser Ausführung wird die mittlere Verweildauer der einzelnen Partikel im heißen Kreislauf verlängert.

**Patentansprüche**

1. Verfahren zur thermischen Behandlung von Flüssigkeiten bzw. Flüssigkeit-Feststoffgemischen zur Konzentration der Flüssigkeitsinhaltsstoffe, bei dem der abgeschiedene Dampf in mindestens einem Dampfstrahlverdichter verdichtet und mindestens einem Wärmetauscher zugeführt wird, durch den die zu konzentrierende Flüssigkeit vorerwärmt strömt, dadurch gekennzeichnet, daß die zu behandelnde Flüssigkeit nach Vorerwärmung einem thermischen Kreislauf mit auf Siedetemperatur befindlichem Temperaturniveau zugeführt wird, in dem sich der mindestens eine Dampfabscheider befindet, von dem der abgeschiedene Dampf auf ein höheres Temperaturniveau verdichtet und einem oder mehreren weiteren Wärmetauschern zugeführt wird, in denen die zuvor übertragene Wärmeenergie teilweise zur Erhöhung der Temperatur vom Einspeisungszustand auf den Temperaturzustand im Kreislauf und teilweise zur Verdampfung der Flüssigkeit verwandt wird.

2. Verfahren nach Anspruch 1, dadurch gekennzeichnet, daß das Volumen des thermischen Kreislaufes variabel einstellbar ist.

3. Verfahren nach Anspruch 1 und 2, dadurch gekennzeichnet, daß dem Volumen des thermischen Kreislaufes ein Volumen nachgeschaltet ist, das nur von der abfliessenden Flüssigkeit aus dem thermischen Kreislauf durchflossen wird.

4. Verfahren nach Anspruch 1 bis 3, dadurch gekennzeichnet, daß dem thermischen Kreislauf ein Volumen vorgeschaltet wird, dessen Temperaturniveau einstellbar ist.

5. Verfahren nach Anspruch 1 bis 4, dadurch gekennzeichnet, daß das vom thermischen Kreislauf abfließende Flüssigkeitsvolumen einem Wärmetauscher unter Beibehaltung der Temperatur zugeführt wird.

6. Verfahren nach Anspruch 1 bis 4, dadurch gekennzeichnet, daß das vom thermischen Kreislauf abfließende Flüssigkeitsvolumen nach vorheriger Entspannung auf einen einstellbaren Druck einem Wärmetauscher zugeführt wird.

7. Verfahren nach Anspruch 1 bis 4 und 6, dadurch gekennzeichnet, daß der Entspannungsdampf von der Flüssigkeit getrennt wird.

8. Verfahren nach Anspruch 7, dadurch gekennzeichnet, daß der Entspannungsdampf durch eine Flüssigkeit in einem Abscheidebehälter geleitet wird.

9. Verfahren nach Anspruch 1 bis 8, dadurch gekennzeichnet, daß die Flüssigkeit dem thermischen Kreislauf kontinuierlich zugeführt wird.

10. Verfahren nach Anspruch 1 bis 9, dadurch gekennzeichnet, daß das Volumen der Flüssigkeit im thermischen Kreislauf diskontinuierlich verändert wird.

11. Verfahren nach Anspruch 1 bis 10, dadurch gekennzeichnet, daß die Flüssigkeit dem Umlaufkreislauf aus einem Vorlagebehälter zugeführt wird.

12. Verfahren nach Anspruch 1 bis 11, dadurch gekennzeichnet, daß die Zuführung der Flüssigkeit aus einem Behälter und die Rückführung nach der thermischen Behandlung wieder in den gleichen Behälter derart erfolgt, daß die nach der thermischen Behandlung mit höherer Temperatur zurückfließende Flüssigkeit sich der kälteren Flüssigkeit im Vorlagebehälter überlagert.

13. Verfahren nach Anspruch 1 bis 12, dadurch gekennzeichnet, daß das Verhältnis des Volumens im thermischen Kreislauf zum nach- bzw. vorgeschalteten Volumen veränderbar ist.

14. Verfahren nach Anspruch 1 bis 13, dadurch gekennzeichnet, daß die Flüssigkeit des Volumens, das dem thermischen Kreislauf vor bzw. nachgeschaltet ist, auf einer anderen Temperatur als im thermischen Kreislauf gehalten wird.

15. Anlage zur Durchführung des Verfahrens nach Anspruch 1 bis 14, mit einem Behälter (1) für die thermisch zu behandelnde Flüssigkeit bzw. das Flüssigkeit-Feststoffgemisch und mindestens einem Dampfstrahlverdichter (6), der ausgangsseitig mit einem Wärmetauscher (3) verbunden ist, durch den die aus dem Behälter (1) abgepumpte Flüssigkeit bzw. das Flüssigkeit-Feststoffgemisch strömt, dadurch gekennzeichnet, daß die zu kochende Flüssigkeit von dem Behälter (1) einem heißen Kreislauf (42) zuführbar ist, in dem die Flüssigkeit nach weiterer Erwärmung in dem Wärmetauscher (3) einem Dampfabscheider (2) mit einer Verteileinrichtung (15) im Dampfraum zuführbar ist, dessen dampfseitiger Ausgang mit einem oder mehreren Dampfstrahlverdichtern (6) verbunden ist, die ausgangsseitig über eine Leitung (57) und den Wärmetauscher (3) mit einem Kondensatableiter (17) verbunden sind, wobei die den Wärmetauscher (3) primärseitig durchströmende Flüssigkeit unter teilweiser Verdampfung auf Siedetemperatur ts aufheizbar und die aus dem Dampfabscheider (2) über die Leitung (33) und Pumpe (7) abfließende konzentrierte Flüssigkeit des heißen Kreislaufs (42) ganz oder teilweise einem Behälter (18) für Fluidkonzentrat zuführbar ist, wobei ggf. in einem weiteren Wärmetauscher (4) die über die Leitung (11) vom Behälter (1) zufließende Flüssigkeit durch konzentrierte Flüssigkeit des heißen Kreislaufs (42) von einer Temperatur t2 auf eine Temperatur t3 erwärmbar ist, und daß in der Leitung (11) zwischen dem Ausgang des Behälters (1) und den Wärmetauschern eine aus einem Durchflußmengenmesser (20) und einem Regelventil (21) bestehende Regeleinrichtung (59) zur Durchflußmengenregelung angeordnet ist.

16. Anlage nach Anspruch 15, dadurch gekennzeichnet, daß der Wärmetauscher (3) kondensatausgangsseitig über eine Leitung (32) mit einem Wärmetauscher (5) zur Vorwärmung der dem Wärmetauscher (5) aus dem Behälter (1) zufließenden Flüssigkeit von einer Temperatur t1 auf eine Temperatur t2 verbunden ist.

17. Anlage nach Anspruch 15 und 16, dadurch gekennzeichnet, daß in der mit Fluid aus dem Dampfabscheider (2) durchströmten mit dem Wärmetauscher (4) eingangsseitig verbundenen Leitung (34) ein vom Flüssigkeitsstand im Dampfabscheider (2) steuerbares Ventil (19) und in der ausgangsseitig angeordneten Leitung (73) ein Druckhalteventil (13) angeordnet ist.

18. Anlage nach Anspruch 15 bis 17, dadurch gekennzeichnet, daß der Dampfabscheider (2) über eine Leitung (72) mit Rückschlagarmatur (9) mit einem Apparat (8) mit einem Kondensatableiter (41) zu dessen Vorerwärmung verbunden ist.

19. Anlage nach Anspruch 18, dadurch gekennzeichnet, daß in der Anschlußleitung des Apparats (8) an die Leitung (33) ein vom Flüssigkeitsstand im Dampfabscheider (2) steuerbares Ventil (19) angeordnet ist.

20. Anlage nach Anspruch 19, dadurch gekennzeichnet, daß das über die Leitung (34) durch den Wärmetauscher (4) geführte Flüssigkeitskonzentrat über eine Leitung (73) dem Behälter (1) derart zuführbar ist, daß in diesem eine durchmischungsfreie schichtenartige Kolbenströmung ausbildbar ist.

21. Anlage nach Anspruch 18, dadurch gekennzeichnet, daß der Apparat (8) eingangsseitig mit einem als Vorwärmer ausgebildeten Wärmetauscher (24) und ausgangsseitig über ein Ventil (53) mit der Leitung (33) verbunden ist.

22. Anlage nach Anspruch 15 bis 21, dadurch gekennzeichnet, daß zwischen Rückschlagarmatur (9) und Auslaßstutzen des Apparats (8) ein Abzweig angeordnet ist, der über eine Leitung (71) mit Druckhalteventil (13) mit einem mit dem Wärmetauscher (4) in Wirkverbindung stehenden Behälter (25) derart verbunden ist, daß der Entspannungsdampf durch das im Behälter (25) befindliche Flüssigkeitskonzentrat bis zu einem Auslaßstutzen (26) führbar ist.

23. Anlage nach Anspruch 15 bis 22, dadurch gekennzeichnet, daß zur kontinuierlichen Zu- und Ableitung des Flüssigkeitkonzentrats im heißen Kreislauf (42) parallel zu dem Dampfabscheider (2) ein mit dem Dampfstrahlverdichter (6) in Wirkverbindung stehender Behälter (27) angeordnet ist, der mit dem Dampfabscheider (2) über Leitungen (61, 62) mit einem weiteren Behälter (28) verbunden ist, der eingangsseitig mittels einer Leitung (32') mit dem Dampfstrahlverdichter (6) in Wirkverbindung steht und der über eine Leitung (60) und den Wärmetauscher (4) mit dem Behälter (18) für Flüssigkeitskonzentrat verbunden ist, wobei an dem Ausgang des Wärmetauschers (4) in der Leitung (73) eine aus einem Regelventil (30) und einem Durchflußmengenmesser (29) gebildete Regeleinrichtung (59) angeordnet ist.

24. Anlage nach Anspruch 23, dadurch gekennzeichnet, daß der Behälter (27) mittels einer Verteileinrichtung (65) mit über eine Leitung (69) am Ausgang des Wärmetauschers (4) abgezweigte Flüssigkeit beaufschlagbar ist.

25. Anlage nach Anspruch 23 und 24, dadurch gekennzeichnet, daß zwischen Ausgang des Behälters (27) und oberem Behälterraum eine Beimischleitung (68) mit einer im Behälterraum befindlichen Verteileinrichtung (66) angeordnet ist.

**Claims**

1. Process for the thermal treatment of liquids, respectively mixtures of liquids and solid materials for the concentration of liquid components, in which separated steam is condensed in at least one ejector condenser and fed to at least one heat exchanger, where the preheated liquid to be condensed flows through, characterized in that the liquid to be treated is fed after preheating to a thermal cycle of boiling temperature, where at least one ejector condenser is arranged condensing the separated steam to a higher temperature level and feeding it to one or more further heat exchanger, where transfered thermal energy is partially used for increasing temperature of feed condition to cycle temperature and partially for evaporation of the liquid.

2. Process according to claim 1, characterized in that the volume of the thermal cycle can be adjusted variably.

3. Process according to claim 1 and 2, characterized in that the volume of the thermal cycle is connected to a secondary volume, where only discharged liquid from the thermal cycle flows through.

4. Process according to claim 1 to 3, characterized in that a secondary volume with adjustable temperature level is superposed to the thermal cycle.

5

5. Process according to claim 1 to 4, characterized in that the discharged liquid volume from the thermal cycle is fed to a heat exchanger at constant temperature.

6. Process according to claim 1 to 4, characterized in that the discharged liquid volume from the thermal cycle is fed to a heat exchanger after pressure release to an adjustable pressure.

7. Process according to claim 1 to 4 and 6, characterized in that flash vapour is separated from liquid.

8. Process according to claim 7, characterized in that flash vapour is passed through a liquid in an eliminator section.

9. Process according to claim 1 to 8, characterized in that the liquid is continuously fed to the thermal cycle.

10. Process according to claim 1 to 9, characterized in that the liquid volume is discontinuously varied in the thermal cycle.

11. Process according to claim 1 to 10, characterized in that the liquid is fed to circulation cycle from a collecting tank.

12. Process according to claim 1 to 11, characterized in that feeding of liquid from a tank as well as recirculation after thermal treatment back to the same tank is accomplished by superimposition of liquid flowing back after thermal treatment with a higher temperature to the colder liquid in the collecting tank.

13. Process according to claim 1 to 12, characterized in that the ratio is variable between the volume of the thermal cycle and the secondary volume being connected ahead to or behind.

14. Process according to claim 1 to 13, characterized in that the liquid of the secondary volume connected ahead to or behind the thermal cycle, is adjusted to a different temperature compared to that of the thermal cycle.

15. Plant for implementing the process according to claim 1 to 14, with a tank (1) for the liquids, respectively mixture of liquid and solid material, to be thermally treated, and at least one ejector condenser (6) connected at the output to a heat exchanger (3), where the liquid, respectively mixture of liquid and solid material pumped out of tank (1) flow through, characterized in that the liquid to be boiled can be passed from the tank (1) to a hot cycle (42) in which liquid is fed, after further heating in the heat exchanger (3), to a steam separator (2) with a separating device (15) in the steam space, connected to one or more ejector condensers (6) at the steam outlet, which are connected at the outlet via conduit (57) and heat exchanger (3) to a condensate eliminator (17), whereby primary liquid flowing through the heat exchanger (3) can be heated to boiling temperature t2 with partial evaporation, and concentrated liquid from hot cycle (42) running off the steam separator (2) via conduit (33) and pump (7) is totally or partially fed to a tank (18) for concentrated liquid, whereby liquid flowing from tank (1) via conduit (11) is possibly heated from temperature t2 to temperature t3 in a further heat exchanger (4) by the concentrated liquid of the hot cycle (42), and that controlling means (59) consisting of a flowmeter (20) and a control valve (21) for flow regulation are arranged in conduit (11) between outlet of tank (1) and heat exchangers.

16. Plant according to claim 15, characterized in that heat exchanger (3) is connected at condensate outlet via conduit (32) to a heat exchanger (5) for preheating liquid flowing from tank (1) to heat exchanger (5) from a temperature t1 to a temperature t2.

17. Plant according to claim 15 and 16, characterized in that a valve (19), controllable from the liquid level in the steam separator (2), is arranged in conduit (34) being connected to inlet of heat exchanger (4) and carrying liquid from steam separator (2), and a pressurizing valve (13) is arranged in outgoing conduit (73).

18. Plant according to claim 15 to 17, characterized in that the steam separator (2) is connected via conduit (72) with nonreturn armature (9) to an apparatus (8) with a condensate eliminator (41) for preheating.

19. Plant according to claim 18, characterized in that a valve (19) controlled by liquid level in steam separator (2) is arranged in conduit of apparatus (8), connected to conduit (33).

20. Plant according to claim 19, characterized in that concentrated liquid, passed through heat exchanger (4) via conduit (34), is fed via conduit (73) to tank (1) in such a manner that a dilution free layer-type flow is achieved.

21. Plant according to claim 18, characterized in that inlet of apparatus (8) is connected to a heat exchanger (24) provided as preheater and that outlet is connected to conduit (33) via valve (53).

22. Plant according to claim 15 to 21, characterized in that a branch connection is arranged between nonreturn armature (9) and outlet socket of apparatus (8), connected to a tank (25) via conduit (71) with pressuring valve (13) and the tank (25) being effectively connected to heat exchanger (4) so that flash vapour can be passed to outlet socket (26) through concentrated liquid in the tank (25).

23. Plant according to claim 15 to 22, characterized in that a tank (27) being effectively connected to ejector condenser (6) is arranged parallel to steam separator (2) in the hot cycle (42) for continous supply and elimination of concentrated liquid, connected together with the steam separator (2) via conduits (61, 62) to a further tank (28), which is effectively connected to ejector condenser (6) by means of a conduit (32') at inlet side and connected to tank (18) for concentrated liquid via conduit (60) and heat exchanger (4), whereby controlling means (59) consisting of control valve (30) and flowmeter (29) are arranged at outlet of heat exchanger (4) in conduit (73).

24. Plant according to claim 23, characterized in that tank (27) is admitted with liquid separated by means of a separating device (65) at outlet heat exchanger (4) via conduit (69).

25. Device according to claim 23 and 24, characterized in that an admixture conduit (68) with a separating device located inside the tank is arranged between outlet of tank (27) and upper tank room.

## Revendications

1. Procédé de traitement thermique de liquides ou de mélanges-liquides-matières solides pour concentrer la teneur en matières des liquides, procédé selon lequel la vapeur ainsi séparée est comprimée dans au moins un compresseur à jet de vapeur et est fournie à un échangeur de chaleur traversé par le liquide à concentrer pour être préchauffée, procédé caractérisé en ce qu'après son préchauffage, le liquide à traiter est introduit dans un circuit thermique à un niveau de température situé à la température d'ébullition, circuit comportant au moins un séparateur de vapeur à partir duquel la vapeur séparée est comprimée à un niveau de température plus élevé et fournie à un ou plusieurs autres échangeurs de chaleur dans lesquels on utilise l'énergie calorifique mise préalablement, en partie pour élever la température de l'état correspondant à l'introduction à l'état de température dans le circuit et en partie pour vaporiser le liquide.

2. Procédé selon la revendication 1, caractérisé en ce que le volume du circuit thermique peut se régler de manière variable.

3. Procédé selon les revendications 1 et 2, caractérisé en ce que le volume du circuit thermique comporte en aval un volume qui n'est traversé que par le liquide quittant le circuit thermique.

4. Procédé selon les revendications 1 à 3, caractérisé par un volume en amont du circuit thermique et dont le niveau de température est réglable.

5. Procédé selon les revendications 1 à 4, caractérisé en ce que le volume de liquide quittant le circuit thermique est fourni à un échangeur de chaleur tout en conservant la température.

6. Procédé selon les revendications 1 à 4, caractérisé en ce que le volume de liquide quittant le circuit thermique est fourni à un échangeur de chaleur après détente préalable à une pression réglable.

7. Procédé selon les revendications 1 à 4 et 6, caractérisé en ce qu'on sépare la valeur de détente du liquide.

8. Procédé selon la revendication 7, caractérisé en ce qu'on fait passer la valeur de détente à travers un liquide dans un réservoir-séparateur.

9. Procédé selon les revendications 1 à 8, caractérisé en ce que le liquide est fourni en continu au circuit thermique.

10. Procédé selon les revendications 1 à 9, caractérisé en ce que le volume du liquide varie de manière discontinue dans le circuit thermique.

11. Procédé selon les revendications 1 à 10, caractérisé en ce que le liquide est fourni au circuit à partir d'un réservoir intermédiaire.

12. Procédé selon les revendications 1 à 11, caractérisé en ce que l'alimentation de liquide à partir d'un réservoir et le retour à la fin du traitement thermique dans le même réservoir se font de façon que le liquide qui revient à une température plus élevée après le traitement thermique se superpose dans le réservoir intermédiaire au liquide plus froid.

13. Procédé selon les revendications 1 à 12, caractérisé en ce que le rapport du volume dans le circuit thermique est variable par rapport au volume en amont et au volume en aval.

14. Procédé selon les revendications 1 à 13, caractérisé en ce que le liquide contenu dans le volume en amont ou en aval du circuit thermique est maintenu à une température différente de celle régnant dans le circuit thermique.

15. Installation pour la mise en œuvre du procédé selon les revendications 1 à 14 comportant un réservoir (1) contenant le liquide ou le mélange liquides-matières solides à soumettre au traitement thermique et au moins un compresseur à jet de vapeur (6) dont la sortie est reliée à un échangeur de chaleur (3), qui est traversé par le liquide ou le mélange liquides-matières solides pompés dans le réservoir (1), installation caractérisée en ce que le liquide à traiter en température est fourni à partir du réservoir (1) à un circuit chaud (42) dans lequel le liquide est fourni après une autre élévation de température dans l'échangeur de chaleur (3) à un séparateur de vapeur (2) comportant une installation de répartition (15) dans l'espace vapeur et dont la sortie du côté de la vapeur est reliée à un ou plusieurs compresseurs à jet de vapeur (6) eux-mêmes reliés en sortie par une conduite (57) et l'échangeur de chaleur (3) à un séparateur de condensat (17), le liquide qui traverse le primaire de l'échangeur de chaleur (3) est chauffé à sa température d'ébullition avec évaporation partielle et le liquide concentré qui sort du séparateur de vapeur (2) par la conduite (33) et la pompe (7) du circuit chaud (42) est fourni en totalité ou en partie à un réservoir (18) de concentrat fluide, et le cas échéant, dans un autre échangeur de chaleur (4) le liquide qui est fourni par la conduite (11) à partir du réservoir (1) est réchauffé par le liquide concentré du circuit chaud (42) pour passer d'une température t2 à une température t3 et en ce que dans la conduite (11) entre la sortie du réservoir (1) et les échangeurs de chaleur, il est prévu une installation de régulation (59) pour régler le débit, cette installation se composant d'un débitmètre (20) et d'une vanne de réglage (21).

16. Installation selon la revendication 15, caractérisée en ce que l'échangeur de chaleur (3) est relié à la sortie du condensat par une conduite (32) à un échangeur de chaleur (5) pour le préchauffage du liquide alimentant l'échangeur de chaleur (5) à partir du réservoir (1) pour passer d'une température t1 à une température t2.

17. Installation selon les revendications 15 et 16, caractérisée en ce que la conduite (34) traversée par le fluide venant du séparateur de vapeur (2) et qui est reliée à la sortie de l'échangeur de chaleur (4) est munie d'une vanne (19) commandée par le niveau de liquide dans le séparateur de vapeur (2) et la conduite de sortie (73) comporte une vanne de retenue de pression (13).

18. Installation selon les revendications 15 à 17, caractérisée en ce que le séparateur de vapeur (2) est relié par une conduite (72) munie d'un robinet anti-retour (9) et un appareil (8) à un évacuateur de condensat (41) pour en assurer le préchauffage.

19. Installation selon la revendication 18, caractérisée par une vanne (19) commandée en fonction du niveau de liquide dans le séparateur de vapeur (2) dans la conduite de raccordement de l'appareil (8) à la conduite (33).

20. Installation selon la revendication 19, caractérisée en ce que le concentrat de liquide transféré par la conduite (34) à travers l'échangeur de chaleur (4) est fourni par une conduite (73) au réservoir (1) de façon à y former un écoulement en pulsion pour y réaliser une stratification sans mélange.

21. Installation selon la revendication 18, caractérisée en ce que l'entrée de l'appareil (8) est reliée à un échangeur de chaleur (24) fonctionnant comme préchauffeur et la sortie est reliée à la conduite (33) par l'intermédiaire d'une vanne (53).

22. Installation selon les revendications 15 à 21 caractérisée par une dérivation entre le robinet anti-retour (9) et l'ajutage de sortie de l'appareil (8), dérivation qui est reliée par une conduite (71) à vanne d'arrêt de pression (13) avec un réservoir (25) coopérant avec l'échangeur de chaleur (4) de façon que la vapeur de détente puisse passer dans le concentrat de liquide contenu dans le réservoir (25) jusqu'à un ajutage de sortie (26).

23. Installation selon les revendications 15 à 22, caractérisée en ce que pour l'alimentation et l'évacuation en continu du concentrat liquide dans le circuit chaud (42), en parallèle au séparateur de vapeur (2), il est prévu un réservoir (27) coopérant avec le compresseur à jet de vapeur (6), ce réservoir étant relié au séparateur de vapeur (2) par les conduites (61, 62) à un autre réservoir (28) dont l'entrée est reliée par une conduite (32') au compresseur (6) et est reliée par une conduite (60) et l'échangeur de chaleur (4) au réservoir (18) du concentrat liquide, et à la sortie de l'échangeur (4), la conduite (73) comporte une installation de régulation (59) formée d'une vanne de régulation (30) et d'un débitmètre (29).

24. Installation selon la revendication 23, caractérisée en ce que le réservoir (27) peut recevoir le liquide dérivé à la sortie de l'échangeur de chaleur (4) par l'intermédiaire d'une installation de répartition (65) et d'une conduite (69).

25. Installation selon les revendications 23 et 24, caractérisée par une conduite de mélange (68) munie d'une installation de répartition (66) se trouvant à l'intérieur du réservoir et prévue entre la sortie du réservoir (27) et le volume supérieur du réservoir.

Fig.1

Fig.2

Fig. 3

Fig.4

Fig.5

Fig. 6

Fig.7